(19) **Europäisches Patentamt**
**European Patent Office**
**Office européen des brevets**

(11) **EP 2 461 583 A1**

(12) **EUROPEAN PATENT APPLICATION**
published in accordance with Art. 153(4) EPC

(43) Date of publication:
06.06.2012 Bulletin 2012/23

(51) Int Cl.:
*H04N 7/173* (2011.01)   *G09G 3/20* (2006.01)
*G09G 3/34* (2006.01)   *G09G 3/36* (2006.01)
*G09G 5/14* (2006.01)

(21) Application number: 10804213.6

(22) Date of filing: 22.06.2010

(86) International application number:
PCT/JP2010/060542

(87) International publication number:
WO 2011/013466 (03.02.2011 Gazette 2011/05)

(84) Designated Contracting States:
AL AT BE BG CH CY CZ DE DK EE ES FI FR GB
GR HR HU IE IS IT LI LT LU LV MC MK MT NL NO
PL PT RO SE SI SK SM TR

(30) Priority: 28.07.2009 JP 2009175483

(71) Applicant: Sony Corporation
Tokyo 108-0075 (JP)

(72) Inventor: IGARASHI, Tatsuya
Tokyo 108-0075 (JP)

(74) Representative: Turner, James Arthur
D Young & Co LLP
120 Holborn
London EC1N 2DY (GB)

(54) **DISPLAY DEVICE, DISPLAY SYSTEM, DISPLAY METHOD, AND PROGRAM**

(57) Provided is a display device including an HDMI transmission section which receives image information and control information from an STB, a display which displays the image information received from the STB on at least a part of a display area, and a CPU which, based on the control information received from the STB, controls display of the image information related to a partial display area that forms a part of the display area and also suppresses execution of a display function related to an area other than the partial display area. In this way, when performing passive information acquisition, the image information of an interactive service is displayed on the partial display area, and execution of the display function related to the area other than the partial display area is suppressed, thereby suppressing display of unnecessary video information.

**FIG.1**

# Description

## Technical Field

The present invention relates to a display device, a display system, a display method, and a program.

## Background Art

Today, with the use of a bi-directional network, there are known an IPTV (Internet Protocol Television) system and a CATV system which are capable of providing interactive services along with a video distribution service. For example, the IPTV system uses an IMS (IP Multimedia Subsystem), thereby being capable of providing interactive services such as an instant messaging function, a chat function, and a presence function, in combination with video distribution services such as IP multicast and VOD (Video On Demand).

A display device included in the IPTV system displays video information of distribution content on a display area, and also displays image information of an interactive service on a partial display area which forms a part of the display area. In this way, a user can use the interactive service such as a messaging function with another user or the like while viewing the content.

## Citation List

## Patent Literature

Patent Literature 1: JP H3-198026A
Patent Literature 1: JP H5-196915A

## Summary of Invention

## Technical Problem

However, in addition to being used together with the video distribution service, the interactive service is also used without the video distribution service, in a form of performing only passive information acquisition such as message reception. Then, for example, in the case of confirming a message reception state on a real-time basis, it is necessary that the user keeps activating the display device for a long period of time regardless of a need for viewing content.

For this reason, in the case where there is no need for viewing content, the content displayed on the display device may be annoying, and power consumption of the display device may increase. Therefore, when performing passive information acquisition, the convenience of the display device is reduced.

Accordingly, the present invention provides a display device, a display system, a display method, and a program, which are capable of increasing convenience when performing passive information acquisition.

## Solution to Problem

According to the first aspect of the present invention, there is provided a display device including a communication section which receives image information and control information from an external device, a display section which displays the image information received from the external device on at least a part of a display area, and a control section which, based on the control information received from the external device, controls display of the image information related to a partial display area that forms a part of the display area and also suppresses execution of a display function related to an area other than the partial display area.

Here, when an instruction of a partial display mode is received from the external device, the control section may suppress output of a backlight corresponding to the area other than the partial display area on the display area. Further, the control section may control generation of image data such that a drive voltage of a pixel corresponding to the area other than the partial display area is suppressed.

Further, different areas on the display area may be periodically set, each as the partial display area.

Further, the communication section may transmit display area information indicating a logical resolution and a physical size of the partial display area to the external device, and may receive image information adjusted based on the display area information from the external device. The display section may display the adjusted image information on the partial display area. Here, the communication section may receive, from external device, image information in which at least one of a size of an image, a text size of an image, a layout of an image, or an image for forming the image information is adjusted based on the display area information.

Further, the display area may be divided into a main screen display area and a sub-screen display area which is formed of the partial display area fixed on the display area. When an instruction of a sub-screen display mode is received from the external device, the control section may suppress output of a backlight corresponding to the main screen display area. Here, when the instruction of the sub-screen display mode is received from the external device, the control section may perform control such that driving of a pixel corresponding to the main screen display area is not executed.

Further, a pixel of the main screen display area and a pixel of the sub-screen display area may be each arranged on a display panel formed of a single glass substrate.

Further, a backlight corresponding to the main screen display area and a backlight corresponding to the sub-screen display area may be formed of different light sources from each other. Here, the backlight corresponding to the main screen display area may be a lamp, and the backlight corresponding to the sub-screen display area may be an LED.

Further, in between the backlight corresponding to the main screen display area and the backlight corresponding to the sub-screen display area, there may be provided a light-shielding plate.

Further, the external device may be a network connection device.

According to the second aspect of the present invention, there is provided a display system including the display device according to the first aspect and an external device which transmits image information and control information to the display device.

According to the third aspect of the present invention, there is provided a display method including a step of receiving image information and control information from an external device, and a step of controlling display of the image information related to a partial display area that forms a part of a display area based on the control information, and also suppressing execution of a display function related to an area other than the partial display area.

According to the fourth aspect of the present invention, there is provided a program for causing a computer to execute the display method according to the third aspect.

Advantageous Effects of Invention

According to the present invention, there can be provided the display device, the display system, the display method, and the program, which are capable of increasing convenience when performing passive information acquisition.

Brief Description of Drawings

[Fig. 1] Fig. 1 is a diagram showing an outline of a display device according to an embodiment of the present invention.
[Fig. 2] Fig. 2 is a block diagram showing architecture of an IPTV service using an IMS.
[Fig. 3] Fig. 3 is a block diagram showing a main configuration of an STB.
[Fig. 4] Fig. 4 is a block diagram showing a main configuration of a TV.
[Fig. 5] Fig. 5 is a perspective view showing a configuration of a display shown in Fig. 4.
[Fig. 6] Fig. 6 is a diagram showing an example of a display method according to a first embodiment of the present invention.
[Fig. 7] Fig. 7 is a block diagram showing a configuration around an LCD panel of a TV according to the first embodiment of the present invention.
[Fig. 8] Fig. 8 is a block diagram showing a configuration of HDMI.

[Fig. 9] Fig. 9 is a diagram showing identification information of a video format.
[Fig. 10A] Fig. 10A is a diagram showing a data structure of CEC.
[Fig. 10B] Fig. 10B is a diagram showing a data structure (header block) of CEC.
[Fig. 10C] Fig. 10C is a diagram showing a data structure (data block) of CEC.
[Fig. 11] Fig. 11 is a diagram showing a definition command of CEC.
[Fig. 12] Fig. 12 is a diagram showing an extended command of CEC.
[Fig. 13] Fig. 13 is a sequence diagram showing the display method according to the first embodiment of the present invention.
[Fig. 14] Fig. 14 is a diagram showing another example of the display method according to the first embodiment of the present invention.
[Fig. 15] Fig. 15 is a diagram showing an example of a display method according to a second embodiment of the present invention.
[Fig. 16] Fig. 16 is a plan view showing a configuration around an LCD panel of a TV according to the second embodiment of the present invention.
[Fig. 17] Fig. 17 is a partial cross-sectional view showing the configuration shown in Fig. 16.
[Fig. 18] Fig. 18 is a block diagram showing a circuit configuration around the LCD panel.
[Fig. 19] Fig. 19 is a diagram showing a gate drive circuit shown in Fig. 18.
[Fig. 20] Fig. 20 is a timing diagram showing scanning of gate drive of a main screen display mode.
[Fig. 21] Fig. 21 is a timing diagram showing scanning of gate drive of a sub-screen display mode.
[Fig. 22] Fig. 22 is a timing diagram showing scanning of gate drive of a full screen display mode.

Description of Embodiments

Hereinafter, preferred embodiments of the present invention will be described in detail with reference to the appended drawings. Note that, in this specification and the drawings, elements that have substantially the same function and structure are denoted with the same reference signs, and repeated explanation is omitted.

[1. Outline of display device]

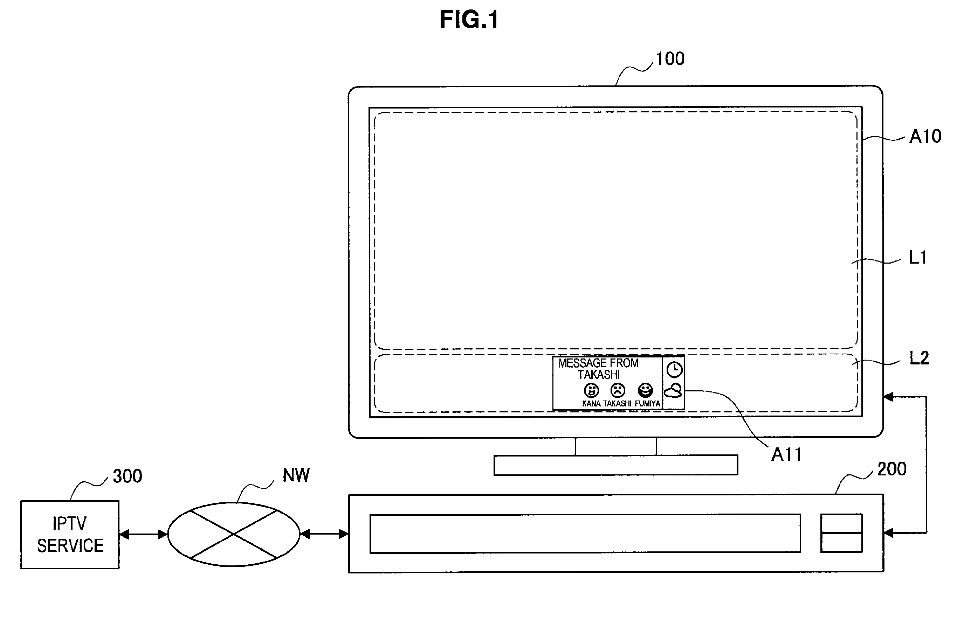

Fig. 1 is a diagram showing an outline of a display device according to an embodiment of the present invention. As shown in Fig. 1, a display device 100 is connected to an IPTV service 300 via an external device 200.

The IPTV service 300 uses a bi-directional network NW, and provides a user with interactive services such as a messaging function, a chat function, and a presence function, in combination with a video distribution service. The display device 100 is a television receiver or the like, and the external device 200 is an STB (Set Top Box) or the like.

By operating the display device 100 via the external device 200, the user views distribution content and confirms a message reception state. The display device 100 displays video information of the content on a display area A10, and displays image information of an interactive service on a partial display area A11 which forms a part of the display area A10.

In the case where the user requires content viewing, the display device 100 executes the display function related to all of areas L1 and L2 of the display area A10. On the other hand, in the case where the user does not require content viewing, the display device 100 suppresses the execution of the display function related to the area L1 that is other than the partial display area A11 within the display area A10.

In this way, when performing passive information acquisition, the image information of the interactive service is displayed on the partial display area A11, and the execution of the display function related to the area L1 that is other than the partial display area A11 is suppressed, thereby suppressing display of unnecessary video information.

[2. Configuration of display system]

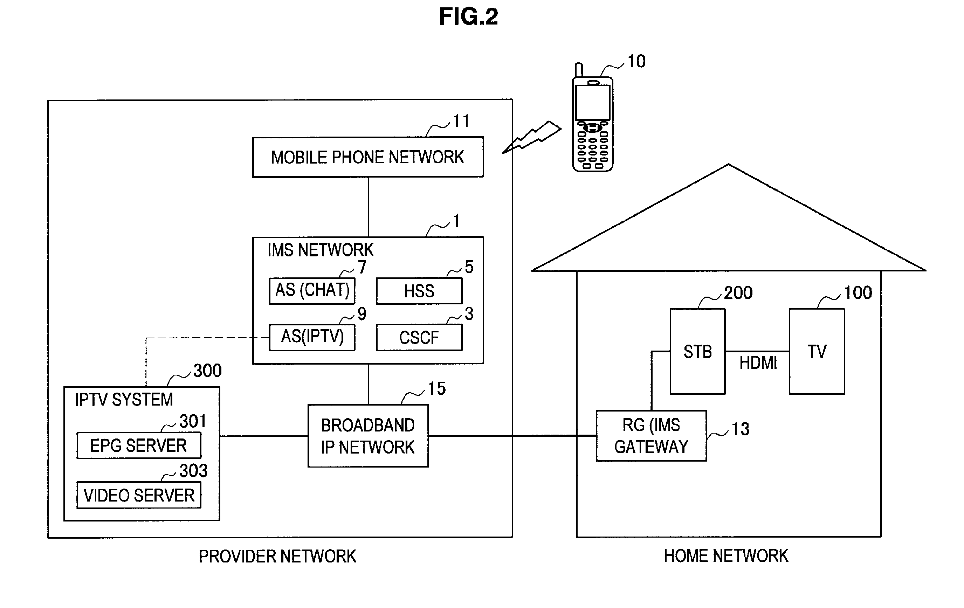

A display system according to an embodiment of the present invention uses architecture of the IPTV service 300 using an IMS. Fig. 2 is a block diagram showing a configuration of the IPTV service 300 using the IMS.

An IMS network 1 is configured from a CSCF (Call Session Control Function) 3 based on an SIP (Session Initiation Protocol) as a main part, an HSS (Home Subscriber Subsystem) 5, AS's (Application Servers) 7 and 9, and the like.

In the IMS, user terminals 10 and 100, which are a mobile phone and a TV, respectively, each set a user ID, and after that, access the CSCF 3 and perform registration of the user terminals 10 and 100 and control of session setting. In this process, it is determined whether the user terminals 10 and 100 are each signed up in a necessary service in accordance with user setting information registered in the HSS 5. The AS's 7 and 9 are servers which actually process each of the services such as a chat function and an IPTV function.

In the chat function, which is one of the examples of services using the IMS, the user terminal 10 which is a mobile phone for example, connects with the AS (chat) 7 that provides a chat function via a mobile phone network 11. Then, the user terminal 10 establishes a session between a plurality of members of a registered user group via the AS (chat) 7, and performs a chat session among the members via a relay server, using an MSRP (Message Session Relay Protocol).

Further, the IPTV function, which is another example of services using the IMS, the user terminal 100 which is a TV for example, connects with the AS (IPTV) 9 on a broadband IP network 15 via an STB 200 and an RG (IMS gateway) 13. The AS (IPTV) 9 realizes an IPTV function in cooperation with an EPG (Electronic Program Guide) server 301 that performs a service and a video server 303 that distributes content.

On a home network, the TV 100 is connected to the STB 200 using video/audio input-output interface standard such as an HDMI (High-Definition Multimedia Interface).

[2-1. Configuration of external device]

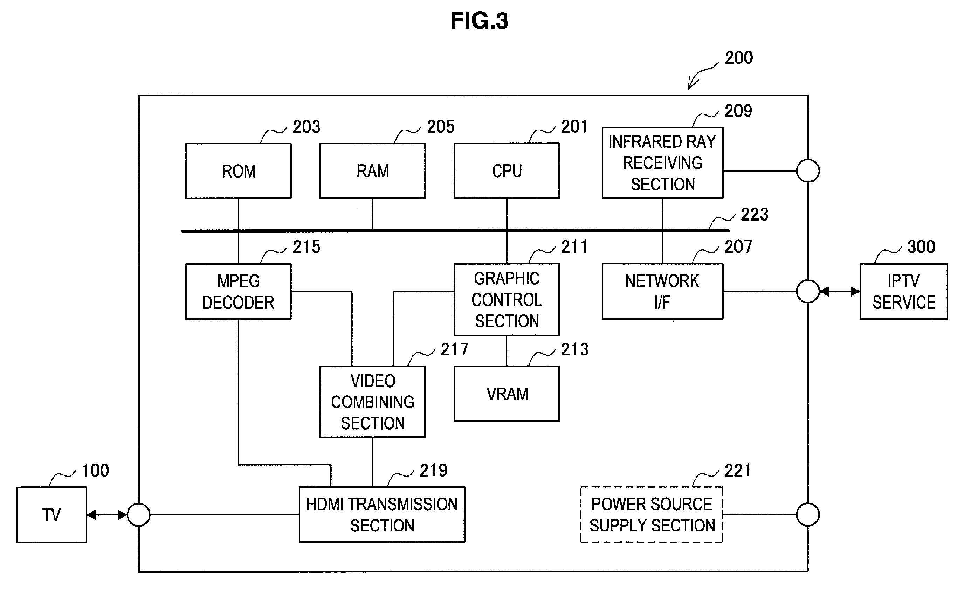

Fig. 3 is a block diagram showing a main configuration of the STB 200. The STB 200, which is an external device, is configured from a CPU 201, a ROM 203, a RAM 205, a network I/F 207, an infrared ray receiving section 209, a graphic control section 211, a VRAM 213, an MPEG decoder 215, a video combining section 217, an HDMI transmission section 219, a power source supply section 221, and a system bus 223.

The CPU 201 controls the entire STB 200 by developing on the RAM 205 and executing a processing program stored in the ROM 203. The processing program includes a communication protocol used for accessing the IPTV service 300 and an application used for controlling a user interface such as an EPG

The network I/F 207 is used for communication with the IPTV service 300, and the infrared ray receiving section 209 transmits a user's instruction input through a commander (not shown) to the application. The graphic control section 211 is used for generating a graphical user interface (GUI) image such as the EPG, and the VRAM 213 stores image data to be processed by the graphic control section 211.

The MPEG decoder 215 decodes the content which is compressed using compression technology such as MPEG and distributed. The video combining section 217 combines the output of the graphic control section 211 with decoded video data. Accordingly, in accordance with a setting of transmittance, the GUI image is displayed on the video information of content in a superimposed manner. The HDMI transmission section 219 outputs a video/audio signal after being processed by the MPEG decoder 215 and the video combining section 217 to the TV 100, and the power source supply section 221 supplies each sections with power source.

[2-2. Configuration of display device]

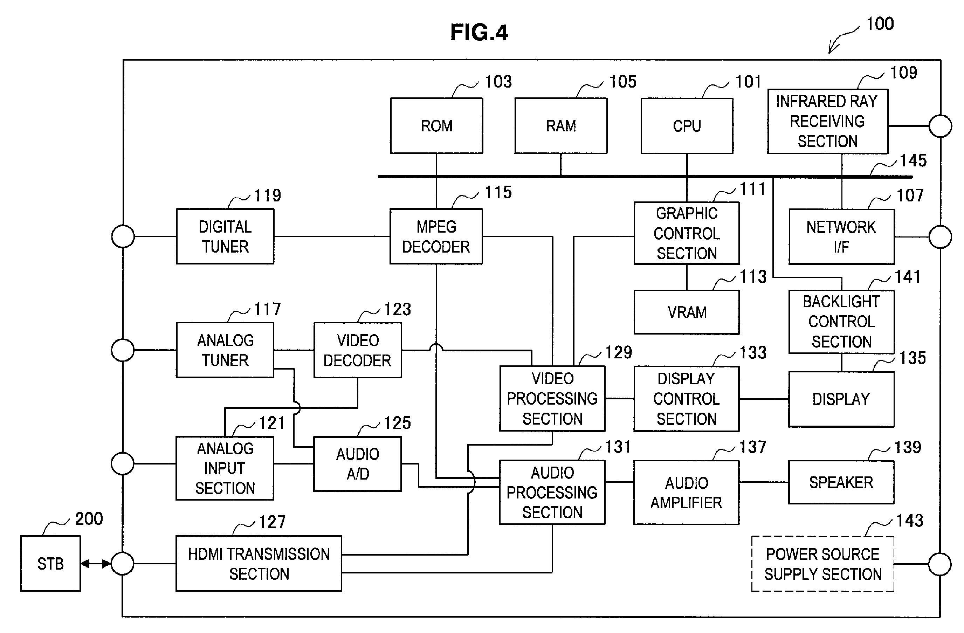

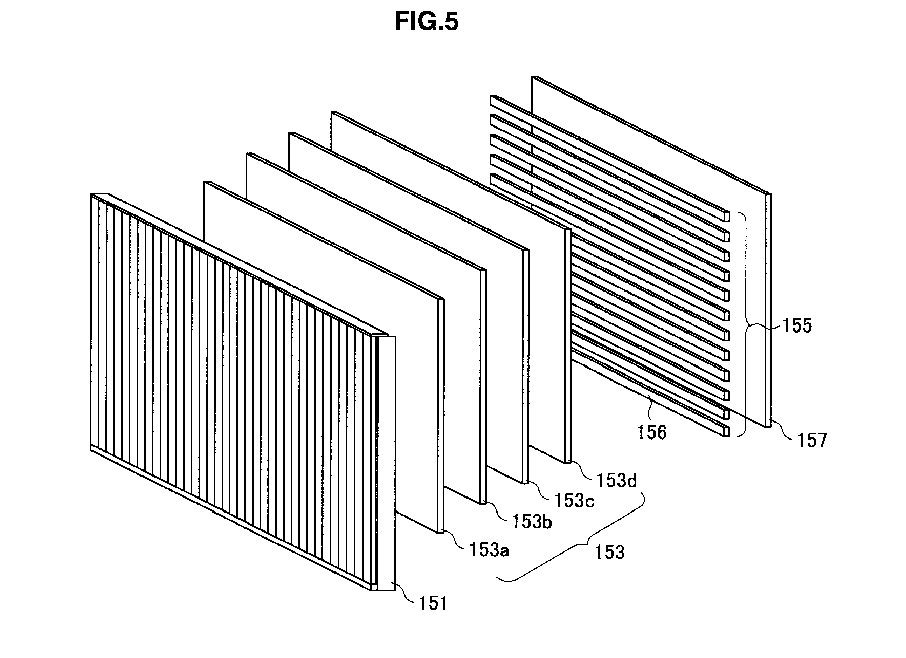

Fig. 4 is a block diagram showing a main configuration of the TV 100. Fig. 5 is a perspective view showing a configuration of a display 135 shown in Fig. 4.

The TV 100, which is a display device, is an LCD (Liquid Crystal Display) TV. The TV 100 is configured from a CPU 101, a ROM 103, a RAM 105, a network I/F 107, an infrared ray receiving section 109, a graphic control section 111, a VRAM 113, and an MPEG decoder 115. The TV 100 is configured from, together with an analog tuner 117 and a digital tuner 119, an analog input section 121, a video decoder 123, an audio A/D 125, an HDMI transmission section 127, a video processing section 129, an audio processing section 131, a display control section 133, a display 135, an audio amplifier 137, a speaker 139, a backlight control section 141, a power source supply section 143, and a system bus 145.

The analog input section 121 is used for input of an analog video/audio signal from external equipment. The video decoder 123 and the audio A/D 125 convert an analog video/audio signal into a digital signal. The HDMI transmission section 127 is used for input of a digital video/audio signal from the STB 200.

The video/audio signal input from the tuner 117, 119, the analog input section 121, or the HDMI transmission section 127 is input directly or indirectly to the video processing section 129 and the audio processing section 131, and the video/audio signal designated by the user is output to the display control section 133 and the audio amplifier 137.

In order to display video information corresponding to video data in a predetermined area on the display area A10, the video processing section 129 performs scaling processing of the video data. Note that the scaling processing is technology conventionally used for the display of the video information in a two-screen display mode, a secondary screen display mode, and the like.

The display control section 133 generates and supplies the display 135 with a timing signal for driving a pixel and a video data signal based on a vertical/horizontal synchronization signal of the video signal input from the video processing section 129.

As shown in Fig. 5, the display 135 is configured from an LCD panel 151, optical films 153 (153a to 153d), a cold-cathode tube lamp group 155 which forms a backlight, and a reflective plate 157. On a glass substrate (not shown) of the LCD panel 151, a circuit for driving a pixel and a circuit for driving a backlight, which are not shown, are mounted. The optical film 153 optically adjusts diffusion or the like of a backlight beam. The reflective plate 157 reflects the backlight beam on the LCD panel 151 side.

The display control section 133 controls the circuit for driving a pixel, and also supplies the circuit for driving a backlight with a signal for adjusting the quantity of light of the entire backlight. The light control signal of the backlight is generated by the video processing section 129 based on the luminance setting value and the video signal characteristics of the display 135.

The HDMI transmission section 127 receives image information and control information from the STB 200. The display 135 displays the image information on at least a part of the display area A10. The CPU 101 controls the entire TV 100 by developing on the RAM 105 and executing a processing program stored in the ROM 103. The processing program includes an application for executing a display method according to the present invention. The CPU 101 controls the display of the image information related to the partial display area A11 and also suppresses the execution of the display function corresponding to the area other than the partial display area A11, based on the control information.

[3. First embodiment]

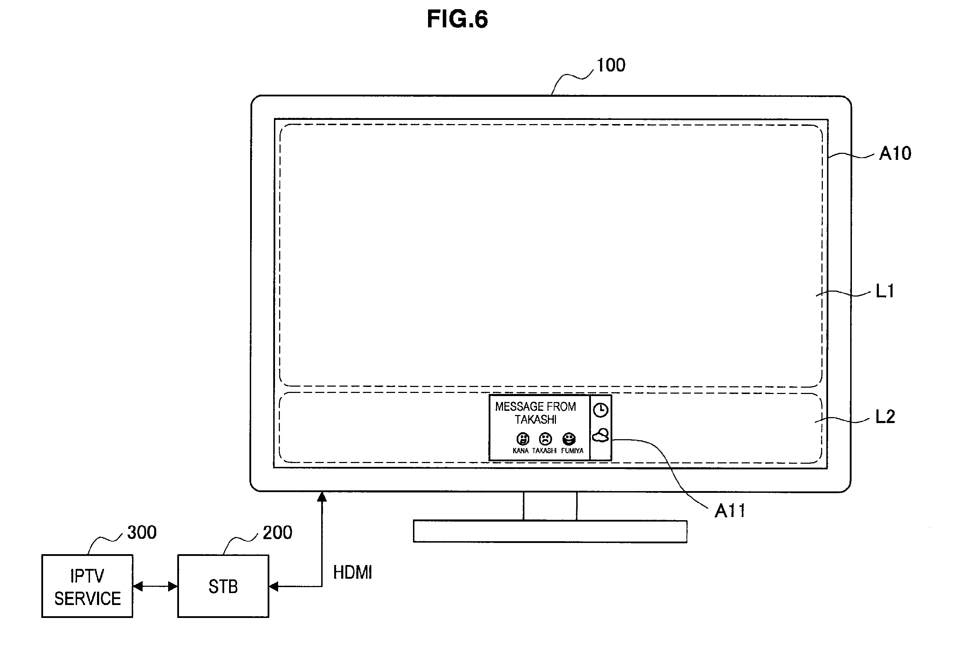

Fig. 6 is a diagram showing an example of a display method according to a first embodiment of the present invention. A TV 100 according to the first embodiment has two display modes including a full display mode and a partial display mode.

In the full display mode, video information is displayed on a display area A10 of the display 151, and in the partial display mode, image information is displayed on a partial display area A11 which forms a part of the display area A10. The video information is input from the IPTV service 300 via the STB 200. For example, in the case where the display area A10 is formed of 1920x1080 pixels (note that three LCD pixel units of R, G, and B form one pixel), the partial display area A11 is set as an area formed of 320x240 pixels at the bottom center of the display area A10. Note that the partial display area A11 may be set such that the number of pixels in the horizontal direction is the same as that of the full display area A10.

When being instructed to change the display mode by the STB 200, the TV 100 changes the display mode by the control of the CPU 101. In the case where content viewing is required, the STB 200 issues an instruction of a full display mode, and in the case where content viewing is not required and passive information acquisition such as message reception is performed, the STB 200 issues an instruction of a partial display mode. Then, in the full display mode, in the areas L1 and L2, the output of a baglight corresponding to the full display area A10 is performed (backlight is lit up) normally (lighted). In the partial display mode, in the area L1 that is other than the partial display area A11, the display of the video information is suppressed by suppressing the output of the corresponding backlight. Note that the output of the corresponding backlight may be 0 (unlighted).

[3-1. Display device]

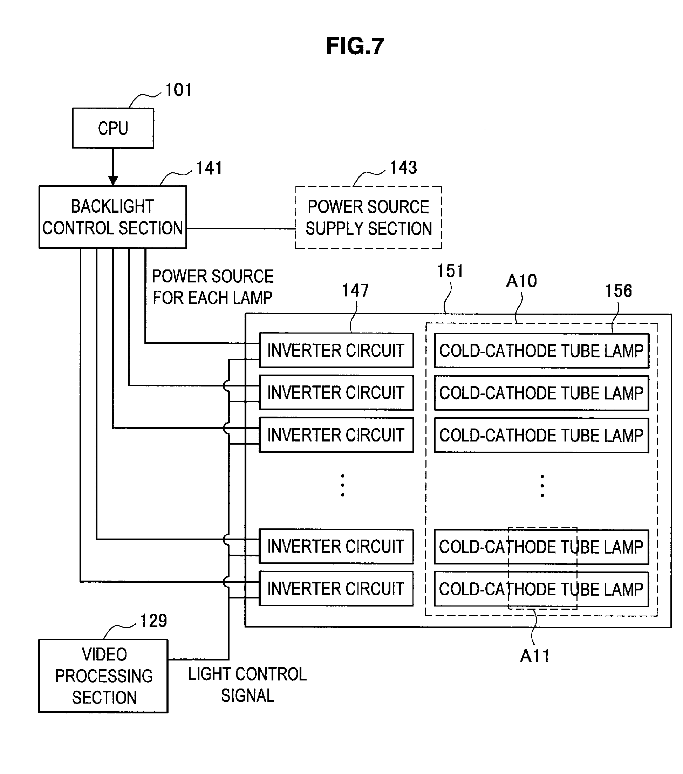

Fig. 7 is a block diagram showing a configuration around an LCD panel 151 of the TV 100 according to the first embodiment of the present invention. In the back surface of the LCD panel 151, a plurality of cold-cathode tube lamps 156 (hereinafter, may also be referred to as lamps 156), which configure a cold-cathode tube lamp group 155 (hereinafter, may also be referred to as lamp group 155) that forms a backlight, are arranged in the vertical direction of the LCD panel 151.

The lamp 156 is driven by an inverter circuit 147 that is provided to each lamp 156, based on the light control signal input from the video processing section 129. Note that the inverter circuit 147 may be provided to every two or more lamps 156, instead of being provided to one lamp 156.

The inverter circuit 147 is supplied with the power source from the power source supply section 143 via the backlight control section 141. Here, in the full display mode, the backlight control section 141 performs normal power source supply to the inverter circuit 147 of the lamp 156 corresponding to the display area A10, and in the partial display mode, the backlight control section 141 suppresses the power source supply to the inverter circuit 147 of the lamp 156 corresponding to the area other than the partial display area A11.

In the example shown in Fig. 7, the partial display area A11 is set at the bottom center of the display area A10 so as to correspond to Fig. 6. The partial display area A11 may be set in a given area on the display area A10, or may be set in any area. Further, in order to prevent deterioration of the lamp 156 corresponding to the partial display area A11, the partial display area A11 may be periodically set at different areas on the display area A10.

[3-2. Display method]

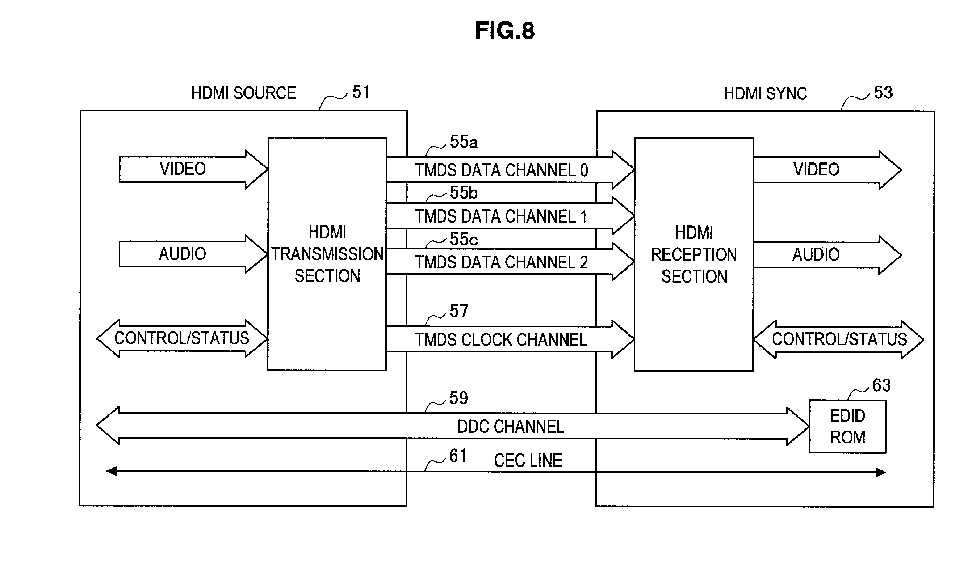

Hereinafter, with reference to Figs. 8 to 12, there will be described a display method according to the first embodiment of the present invention. In the display method according to the embodiment of the present invention, the setting of a display mode of the HDMI-connected TV 100 is changed from the STB 200, by extending the HDMI standard.

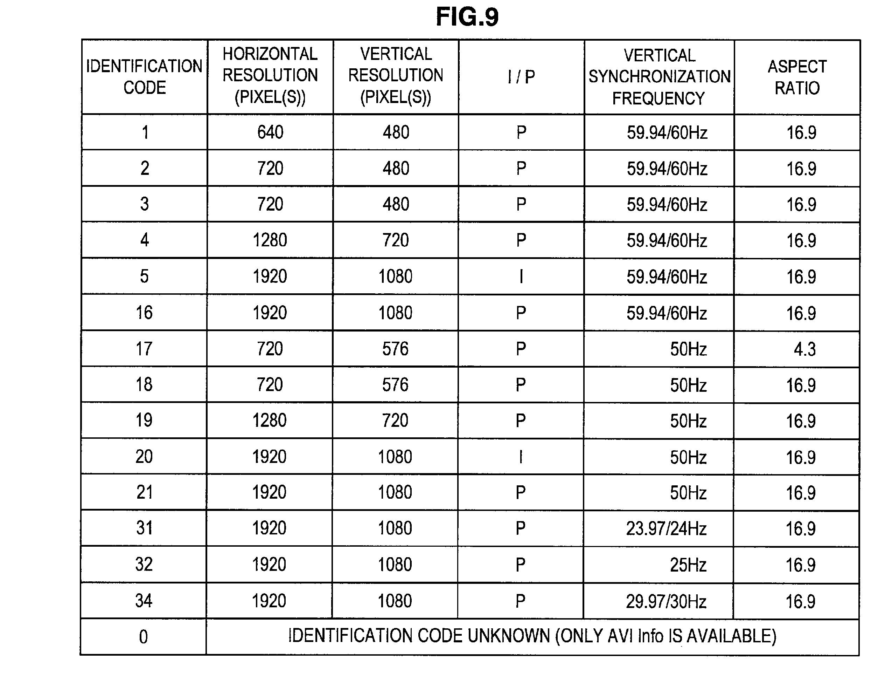

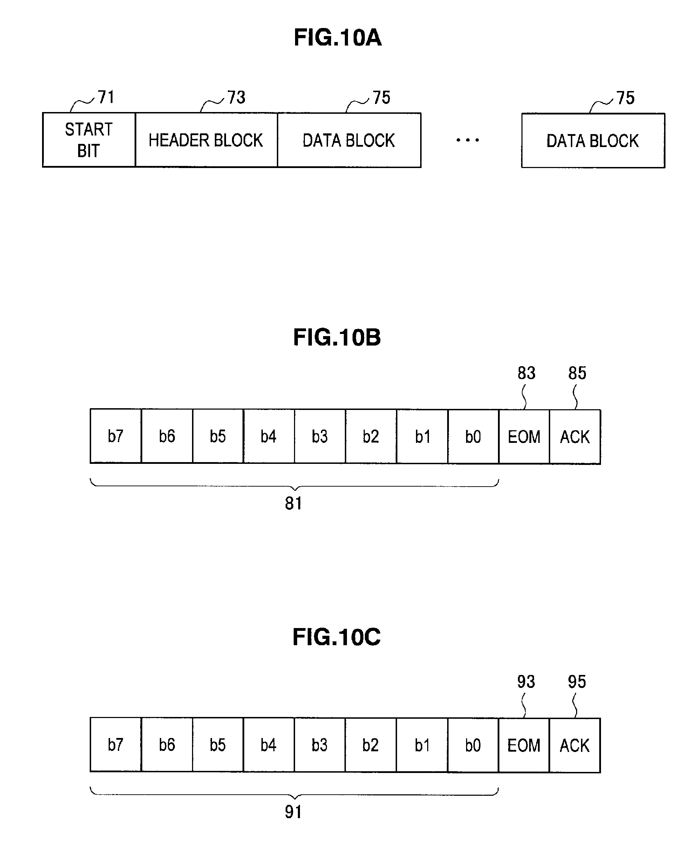

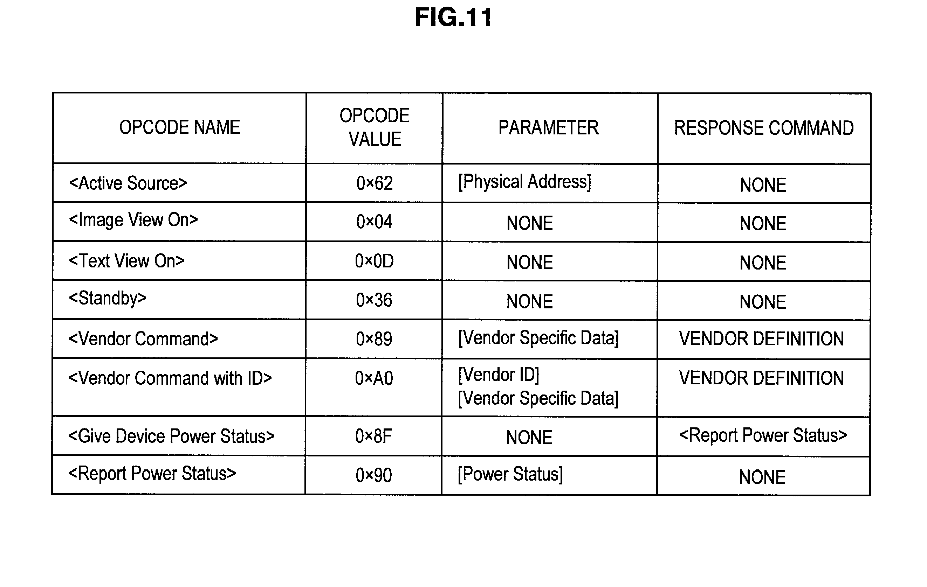

First, the HDMI standard will be described. Fig. 8 is a block diagram showing a configuration of HDMI, and Fig. 9 is a diagram showing identification information of a video format. Figs. 10 are each a diagram showing a data structure of CEC, and Fig. 11 is a diagram showing a definition command of CEC.

As shown in Fig. 8, the HDMI standard defines three data channels 55 (55a, 55b, and 55c), a clock channel 57, a display data channel (DDC) 59, and a consumer electronics control (CEC) line 61 between a transmission device (HDMI source) 51 and a reception device (HDMI sync) 53.

The data channels 55 (55a to 55c) and the clock channel 57 use high-speed digital transmission called TMDS (Transition Minimized Differential Signaling), and performs unidirectional communication from the transmission device 51 to the reception device 53. The DDC channel 59 is mainly used for display control, and the CEC line 61 is mainly used for consumer electronics control. The DDC channel 59 and the CEC line 61 each use a frequency lower than that of the data channel 55 and that of the clock channel 57, and perform bidirectional communication between the transmission device 51 and the reception device 53.

The transmission device 51 reads E-EDID (Enhanced Extended Display Identification Data) stored in an E-EDID ROM 63 of the reception device 53 via the DDC channel 59. The E-EDID includes identification information indicating a video format that is applicable to the reception device 53.

For example, as shown in Fig. 9, with the scaling processing of video data, a full high-definition TV applies a plurality of video formats having from the minimum resolution of 640x480 up to the maximum resolution of 1920x1080 to a predetermined area on the display area A10, and can display video information. The identification information of each video format includes a resolution, a vertical synchronization frequency, an aspect ratio, and the like of the video format.

As shown in Fig. 10A, the CEC line 61 transmits data configured from a start bit 71, a header block 73, and one or more data blocks 75. The data block 75 is a block which follows a start bit 71 transmitted at 4.5 ms and a header block 73 including header information, and includes data that is actually transmitted.

As shown in Fig. 10B and Fig. 10C, the header block 73 and the data block 75 are configured from eight payload bits (b0 to b7) 81, 91, EOM (End Of Message) 83, 93, and ACK (Acknowledge) 85, 95.

In the header block 73, a logical address (4 bits) of the transmission device 51 and a logical address (4 bits) of the reception device 53 are specified. In the data block 75, an opcode, an operand, and a parameter, and the like are specified up to 8 bits. The command specified by the data block 75 is transmitted from the transmission device 51 to the reception device 53 based on the address specified by the header block 73. Note that a broadcast address is also available, which specifies all addresses of reception devices 53 that can receive the command.

As shown in Fig. 11, the CEC standard defines a plurality of commands such as an image display command <Image View On>, an input switch command <Active Source>, and the like. Each command includes an opcode name, an opcode value, a parameter, and a response command.

The transmission device 51 specifies the opcode value and the parameter to the payload bits 91 of each data block 75, and sets the EOM bit 93 and the ACK bit 95, which are a final data block, to 1. When receiving the command, the reception device 53 changes the ACK bit 95 to 0, and then the transmission device 51 confirms reception of the data block 75.

The response command is a command that the reception device 53, which has received the command, is to send back to the transmission device 51. For example, when receiving a power source status inquiry command <Give Device Power Status>, the reception device 53 notifies the reception device 51 of the power source status with a power source status report command <Report Power Status>.

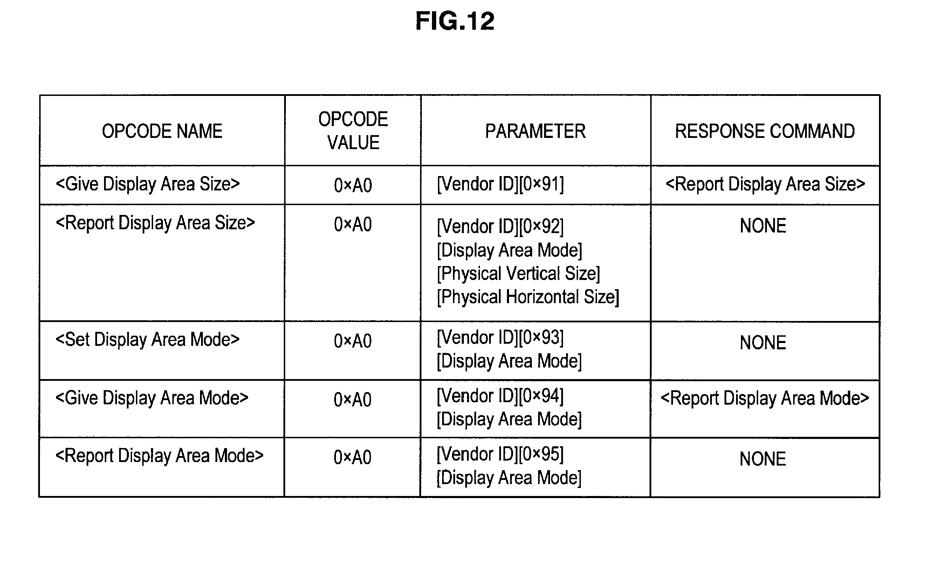

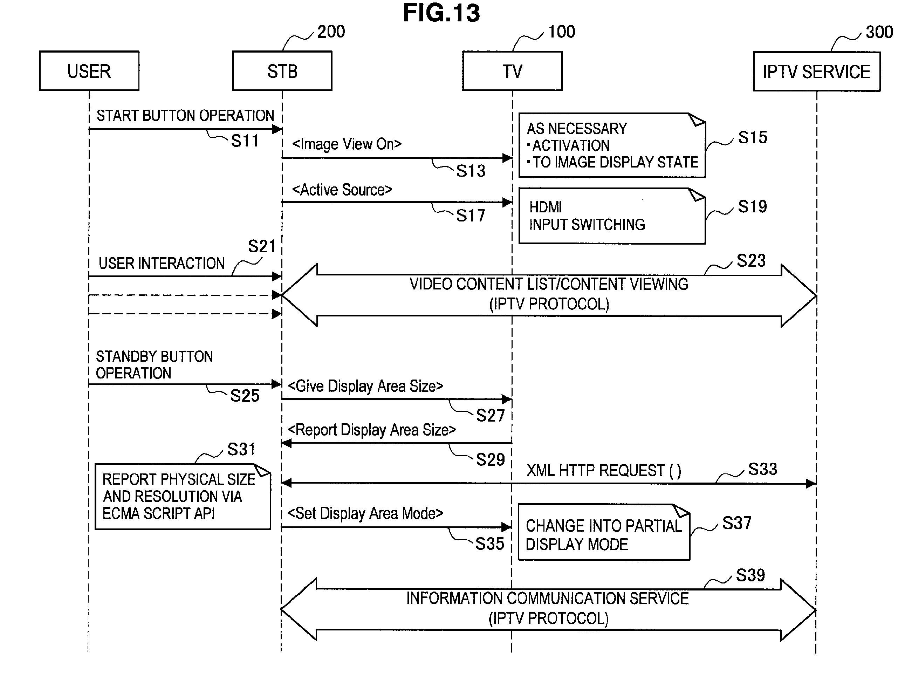

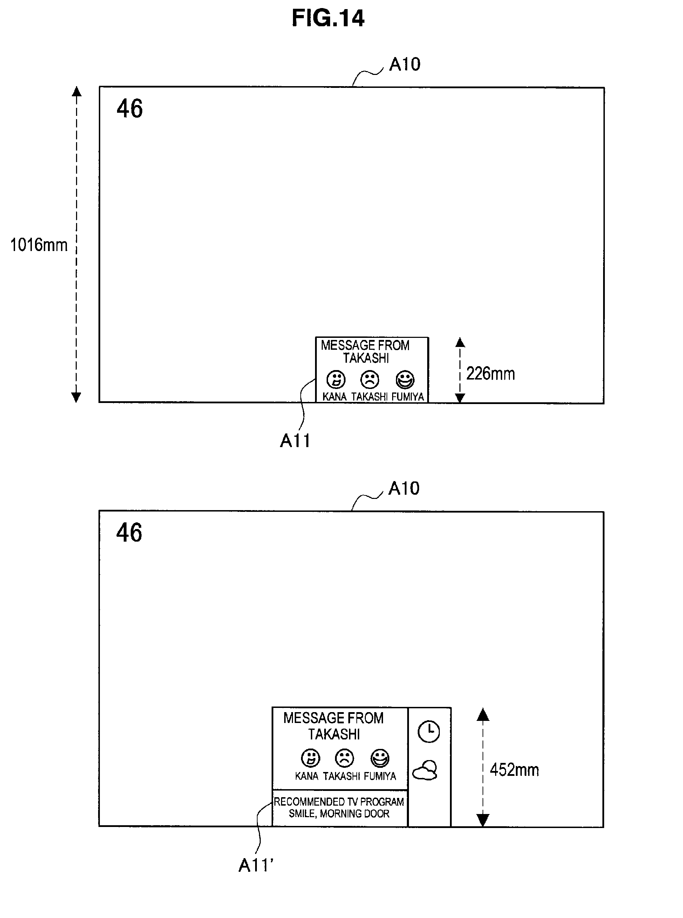

Next, the display method according to the present embodiment will be described. Fig. 12 is a diagram showing an extended command of CEC. Fig. 13 is a sequence diagram showing the display method according to the first embodiment of the present invention. Fig. 14 is a diagram showing another example of the display method according to the present embodiment.

To the video format shown in Fig. 9, the video processing section 129 of the TV 100 performs scaling processing of the video data in accordance with the resolution of the video data input from the STB 200 and the video format set by the STB 200. For example, in the high-vision TV, the video format of resolution 1920x1080 is generally set for the display area A10. In the case where the resolution of the video data is smaller than the set video format, the video processing section 129 performs extension processing of the video data and outputs the video data to the display control section 133.

On the other hand, the TV 100 according to the present embodiment applies the above-mentioned plurality of video formats to the partial display area A11 having 320x240 pixels, for example, and displays the image information corresponding to image data.

In the case where the resolution of the image data is larger than the number of pixels of the partial display area A11, the video processing section 129 performs reduction processing of the image data and outputs the image data to the display control section 133. For example, in the case where a video format 1 (resolution 640x480) called VGA resolution is applied to the partial display area A11 having 320x240 pixels, the video processing section 129 performs scaling processing such that the image data is reduced to 1/2 vertically and horizontally.

Then, the video processing section 129 generates video data in such a manner that the image information corresponding to the reduced image data is displayed on the partial display area A11, and that the video information corresponding to any video data or black video data is displayed on the area other than the partial display area A11. Accordingly, to the display control section 133, the video data having resolution of 1920x1080 is output in the same manner as the full display mode.

In general, for an LCD TV, an LCD panel of a VA (Vertical Alignment) mode and an IPS (In-Plane Switching) mode is adopted, which does not apply drive voltage to the pixel supplied with the black video data. Accordingly, by supplying the pixel corresponding to the area other than the partial display area A11 with the black video data, the power consumed by the drive voltage can be suppressed. Further, by supplying the pixel corresponding to the area other than the partial display area A11 with the black video data, decorative display effects can be obtained around the partial display area A11, with gradations using light that leaks in the area other than the partial display area A11.

Further, for the CEC command shown in Fig. 11, an individual extended command can be set by a vendor in the CEC standard. In the extended command, a vendor ID and an opcode value of the command are specified.

As shown in Fig. 12, the extended command includes a display area size request command <Give Display Area Size> and a display area size report command <Report Display Area Size>. Further, the extended command includes a display mode setting command <Set Display Area Mode>, a display mode request command <Give Display Area Mode>, and a display mode report command <Report Display Area Mode>.

For example, the STB 200 requests a display area size from the TV 100 with the display area size request command, and the TV 100 reports the display area size to the STB 200 with the display area size report command. Further, the STB 200 requests a display mode from the TV 100 with the display mode request command, and causes the TV 100 to change the setting of display mode with the display mode setting command. On the other hand, the TV 100 reports the current display mode to the STB 200 with the display mode report command.

Hereinafter, with reference to Fig. 13, the display method according to the first embodiment of the present invention will be described. As shown in Fig. 13, when a user presses a start button on a commander (Step S11), the STB 200 shifts from a standby mode to a normal mode. Although the STB 200 receives an infrared ray from the commander in the standby mode, the STB 200 maintains other functions in low power consumption state, and enables the function for accessing the IPTV service 300 in the normal mode.

The STB 200 transmits the image display command to the TV 100 using the HDMI transmission section 219 (S13). When the TV 100 is in the standby mode at the time point of receiving the image display command, the TV 100 shifts to the normal mode (S15).

The STB 200 may use a text display command instead of the image display command. When receiving the image display command, the TV 100 continually turns off menu display on the on-screen display (OSD), but when receiving the text display command, the TV 100 maintains the menu display even in the case where the menu display on the OSD is turned on.

The STB 200 transmits the input switch command to the TV 100 (S17). When receiving the input switch command, the TV 100 switches the input performed by the HDMI transmission section 127 such that the video data transmitted from the STB 200 which has transmitted the command is input (S19). Then, the TV 100 displays a GUI menu of the STB 200 along with the video information corresponding to the input video data.

The STB 200 is equipped with an HTML browser compliant to the Open IPTV Forum's specification, acquires content menus of an EPG service and a VOD service from the IPTV service 300 as an HTML document, and causes the TV 100 to display the content menu as the GUI menu.

The user uses the commander, and performs an interaction such as content selection on the GUI menu (S21). In this way, the user receives a video distribution service from the IPTV service 300 (S23). In general, at the time of viewing content, the video information of the content is displayed in the full display mode.

When the user presses a standby button on the commander (S25), the STB 200 starts passive information acquisition in which content viewing is not performed. Note that the standby button may be provided on the GUI menu, instead of being provided on the commander.

The STB 200 transmits the display area size request command to the TV 100 by the HDMI transmission section 219 (S27). When receiving the command, the TV 100 sends back, to the STB 200, the display area size report commands for all display modes which are applicable to own device (S29). As the parameter of the display area size report command, the TV 100 specifies a display mode and a physical size of a predetermined area of the display area A10. The display mode is a 1-byte parameter, and the physical size is a parameter which represents each of the vertical and horizontal sizes (in mm) of the predetermined area of the display area A10 on the LCD panel 151 in 2 bytes.

In the present embodiment, the TV 100 sends back, to the STB 200, the display area size report commands for the full display mode and the partial display mode. For example, in the case where the LCD panel 151 of the TV 100 has a diagonal size of 46 inches, the STB 200 specifies the following: the display mode of 0 and the size of 1016x572 mm for the full display mode; and the display mode of 1 and the size of 226x95 mm for the partial display mode.

When receiving the display area size report command, the STB 200 transmits the support state of the partial display mode and the physical size of the partial display area A11 to the IPTV service 300 (S31). In the case where the TV 100 supports the partial display mode, the IPTV service 300 selects and transmits to the STB 200 an appropriate logical resolution for the display in the partial display mode.

In more detail, the STB 200 establishes a method as an extended application program interface (API) of an ECMA script by the HTML browser being installed therein. The method makes it possible to read out and to set information on the display mode acquired from the TV 100 (physical size of each display area and applicable logical resolution). The applicable logical resolution corresponds to each video format shown in Fig. 9, and is received from the TV 100 via the CEC line 61.

The application described by the ECMA script acquires information from the API, and notifies the IPTV service 300 of the required information with the request method of XML HTTP (S33). For example, since the partial display area A11 has 320x240 pixels, the IPTV service 300 sends back, to the application 640x480 VGA resolution, which is most approximate, as the appropriate logical resolution.

The STB 200 notifies the TV 100 of the display mode corresponding to the logical resolution specified by the IPTV service 300 with the display mode setting command (S35). In the display mode setting command, any one of the display modes reported by the display area size report command is specified, and in the present embodiment, a display mode 1 is specified as the partial display mode. Further, the STB 200 sets the graphic control section 211 such that the video signal corresponding to the 640x480 VGA resolution specified via the API is output.

When receiving the display mode setting command from the STB 200, the TV 100 changes the display mode to the partial display mode (S37). The TV 100 receives image data to be displayed on the partial display area A11 from the IPTV service 300 via the STB 200. The display control section 133 supplies the display 135 with the image data subjected to scaling processing in order to display it on the partial display area A11.

The backlight control section 141 performs normal power source supply to the inverter circuit 147 of the lamp 156 corresponding to the partial display area A11, and suppresses power source supply to the inverter circuit 147 of the lamp 156 corresponding to the area other than the partial display area A11. Accordingly, the user can perform passive information acquisition such as message reception, without the display of video information of content (S39).

Note that the STB 200 can change the setting of the display mode to the full display mode with the display area setting command that specifies the display mode of 0. For example, in the case where, after confirming message reception, the user issues an instruction to send back a message or an instruction to perform content viewing, the STB 200 changes the setting of the display mode to the full display mode.

Here, as shown in Fig. 14, the IPTV service 300 can adjust the text size, the layout, and the like of the image information displayed on the partial display area A11 in accordance with the physical size and the logical resolution of the partial display area A11, and can generate an HTML document for causing the TV 100 to display the adjusted image information. The STB 200 receives the HTML document, and provides the user with an interactive service in which passive information acquisition is performed.

For example, a description will be made of the case where a 46-inch LCD panel 151 adjusts the text size of the image information in accordance with the physical size of the partial display area A11. Let us assume that the LCD panel 151 has 1920x1080 pixels, the resolution of the video format input for the partial display area is 640x480, and the vertical size of a standard font suitable for reading a character in the full display mode is 36 pixels.

Here, when the physical size of the display area A10 is 1016x572 mm, and the physical sizes of the partial display areas A11 and All' are 302x226 mm and 604x452mm, respectively, the font sizes suitable for reading a character in the partial display areas A11 and All' can be determined as follows.

$$hf'=hf\times(rv'/rv)\times(sv/sv')$$

hf, hf: Vertical size (pixel(s)) of font in full display mode, partial display mode

rv, rv': Vertical resolution (pixel(s)) of display area A10, partial display area A11

sv, sv': Vertical size (mm) of display area A10, partial display area A11

Area A11:$36\times(480/1080)\times(1016/226)=72$ pixels

Area A11': $36\times(480/1080)\times(1016/452)=36$ pixels

In this way, appropriate image information can be displayed on the partial display area A11 since the image information is adjusted based on the logical resolution and the physical size of the partial display area A11. Note that an image size can also be determined in the same manner as the text size. In addition, in the case where there is generated blank space in the partial display area A11 owing to the changes in the text size and the image size, there can be displayed information such as time information and weather information.

[3-3. Summary]

As described above, according to the present embodiment, when performing passive information acquisition, the image information of an interactive service is displayed on the partial display area A11, and the execution of the display function related to the area that is other than the partial display area A11 is suppressed, thereby suppressing the display of unnecessary video information. Further, in the area other than the partial display area A11, by suppressing the output of the backlight and/or generating the image data which can suppress the drive voltage of a pixel, the power consumption of the TV 100 is also reduced.

[4. Second embodiment]

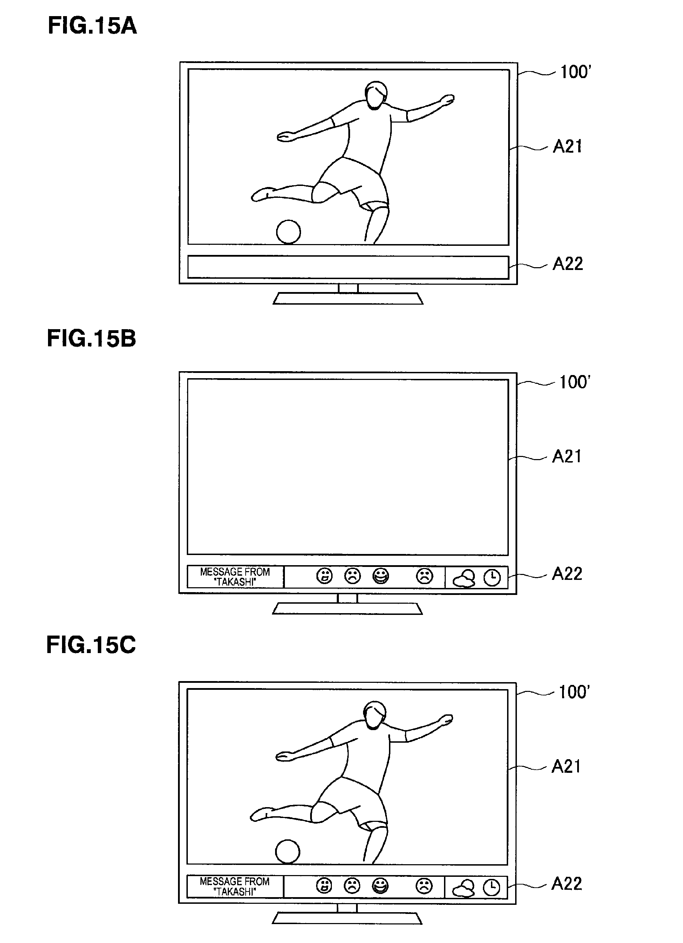

Fig. 15 is a diagram showing an example of a display method according to a second embodiment of the present invention. As shown in Fig. 15, a TV 100' according to the second embodiment has three display modes including a main screen display mode, a sub-screen display mode, and a full screen display mode. The display area of the display 135 is divided into a main screen display area A21 in which content is displayed and a sub-screen display area A22 in which a message reception state or the like is displayed. For example, the main screen display area A21 has 1920x1080 pixels, and the sub-screen display area A22 has 1920x120 pixels.

In a main screen display mode (a), video information is displayed in the main screen display area A21; in a sub-screen display mode (b), image information is displayed in the sub-screen display area A22; and in a full screen display mode (c), image information is displayed in the main screen display area A21 and in the sub-screen display area A22.

When receiving an instruction to change the display mode from the STB 200, the TV 100' changes the display mode with the control of the CPU 101. The STB 200 issues an instruction of the main screen display mode in the case of performing only content viewing, issues an instruction of the sub-screen display mode in the case of performing only passive information acquisition, and issues an instruction of the full screen display mode in the case of performing the content viewing and the passive information acquisition.

In the main screen display mode, the TV 100' performs only the output of the backlight and the driving of the pixels corresponding to the main screen display area A21, and in the sub-screen display mode, the TV 100' performs only the output of the backlight and the driving of the pixels corresponding to the sub-screen display area A22. Note that, in the sub-screen display area A22 at the time of the main screen display mode and in the main screen display area A21 at the time of the sub-screen display mode, the output of the backlight may be suppressed, or may be set to 0.

[4-1. Display device]

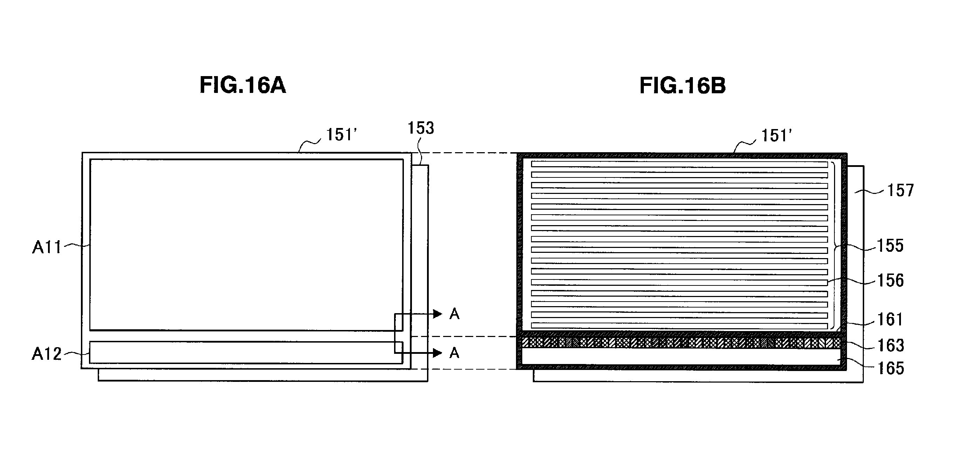

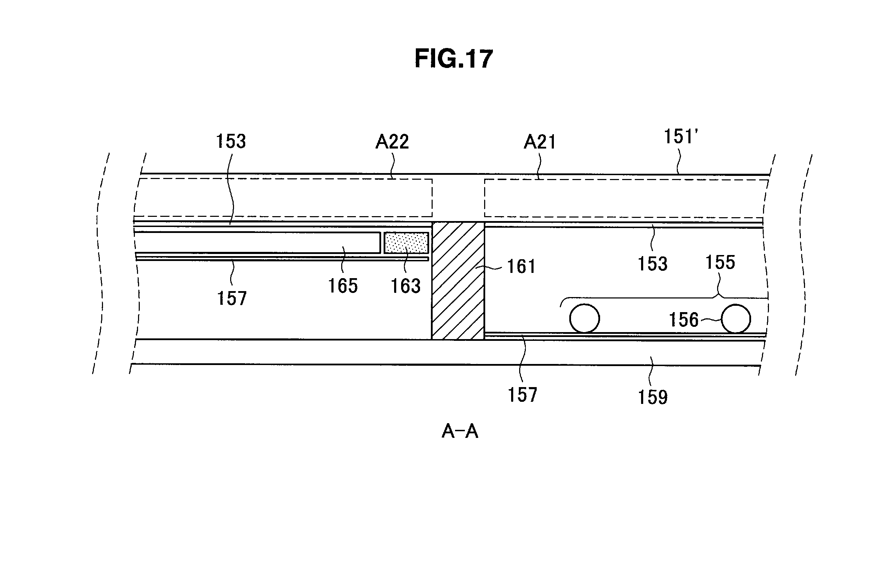

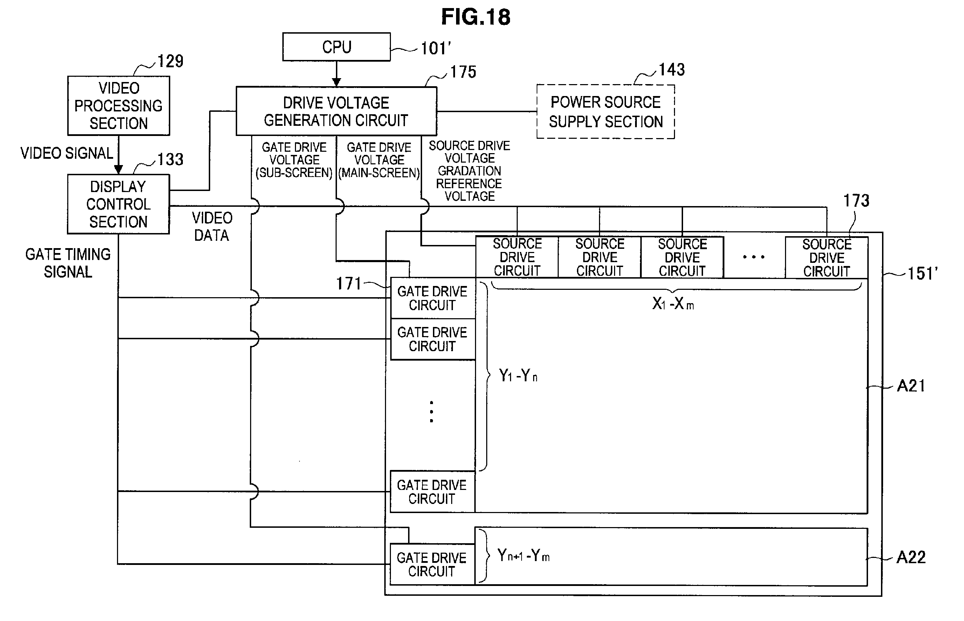

Fig. 16 is a plan view showing a configuration around an LCD panel 151' of the TV 100' according to the second embodiment of the present invention. Fig. 17 is a partial cross-sectional view (cross section A-A) showing the configuration shown in Fig. 16. Fig. 18 is a block diagram showing a circuit configuration around the LCD panel 151'.

The LCD panel 151' is formed of a single glass substrate, and is divided into the main screen display area A21 and the sub-screen display area A22 by a light-shielding plate 161 which is provided in between the LCD panel 151' and a back chassis 159. In the main screen display area A21, a low-cost lamp group 155 functions as a direct type backlight, and in the sub-screen display area A22, an LED group 163 having a long durable period functions as an edge light type backlight.

Within the LCD panel 151', in the main screen display area A21, there are arranged an optical film 153, the lamp group 155, and a reflective plate 157 on the back surface of the LCD panel 151', in the same manner as in the case of the first embodiment. On the other hand, in the sub-screen display area A22, there are arranged the optical film 153, the LED group 163, a light guide plate 165, and the reflective plate 157 on the back surface of the LCD panel 151'.

The LED group 163 is arranged at the side of the light-shielding plate 161, and the light guide plate 165 formed of an acrylic plate or the like is arranged such that the light of the LED group 163 is guided all over the sub-screen display area A22. Note that the LED group 163 may be arranged at other than the side of the light-shielding plate 161. The light-shielding plate 161 prevents the optical interference between the light of the lamp group 155 and the light of the LED group 163.

Each of the lamps 156 for forming the lamp group 155 is driven by an inverter circuit 147 based on the light control signal in the same manner as in the case of the first embodiment. Further, the LED group 163 is also driven by the inverter circuit 147 based on the light control signal in the same manner as the lamp 156. That is: in the main screen display mode, the power source is supplied to the inverter circuit 147 of each lamp 156 of the lamp group 155; in the sub-screen display mode, the power source is supplied to the inverter circuit 147 of the LED group 163; and in the full screen display mode, the power source is supplied to the inverter circuits 147 of each lamp 156 of the lamp group 155 and of the LED group 163.

Accordingly, the pixels of the main screen display area A21 and the sub-screen display area A22 are arranged on the display panel 151' formed of a single glass substrate, and hence, the manufacturing of pixels on the display panel 151' becomes easy. Further, an appropriate light source can be adopted as the backlight depending on the usage frequency of the sub-screen display area A22, and the lifetime of the backlight can be extended particularly by adopting the LED group 165. Note that, although the description is made of the case of an LCD TV in the present embodiment, the same description can be applied to the case of an organic EL display.

As shown in Fig. 18, on the LCD panel 151', there are arranged gate drive circuits 171 which drive gate electrodes (not shown) of lines Y1 to Ym arranged in the horizontal direction, and source drive circuits 173 which drive source electrodes (not shown) of lines X1 to Xm arranged in the vertical direction.

The display control section 133 generates, based on the video signal input from the video processing section 129, a gate timing signal for driving the gate and video data for driving the source. Under the control of the CPU 101, the drive voltage generation circuit 175 supplies the gate drive circuit 171 and the source drive circuit 173 with the power source from the power source supply section 143. The drive voltage generation circuit 175 supplies the gate drive circuit 171 with gate drive voltage for the main screen and the sub-screen, and supplies the source drive circuit 173 with source drive voltage and gradation reference voltage.

The gate drive circuit 171 and the source drive circuit 173 applies the drive voltage to the active element of each pixel, and the backlight beam passing through the pixel changes in accordance with the change in the drive voltage, whereby the video information is displayed on the LCD panel 151'. Note that, in each pixel, there are provided three LCD pixel units having RGB color filters.

In the TV 100' according to the present embodiment, a CPU 101' controls the supply of the gate timing signal and the drive voltage to the gate drive circuit 171 in accordance with the display mode.

Specifically, in the main screen display mode, in order to drive the pixels of lines Y1 to Yn corresponding to the main screen display area A21, the drive voltage is supplied to the corresponding gate drive circuits 171. In the sub-screen display mode, in order to drive the pixels of lines Yn+1 to Ym corresponding to the sub-screen display area A22, the drive voltage is supplied to the corresponding gate drive circuits 171. Further, in the full screen display mode, in order to drive the pixels of lines Y1 to Ym corresponding to the main screen display area A21 and the sub-screen display area A22, the drive voltage is supplied to all the gate drive circuits 171.

The CPU 101' controls the drive voltage generation circuit 175 so as to generate an appropriate source drive voltage in accordance with the designated display mode, and also controls the display control section 133 so as to generate an appropriate gate timing signal.

[4-2. Display method]

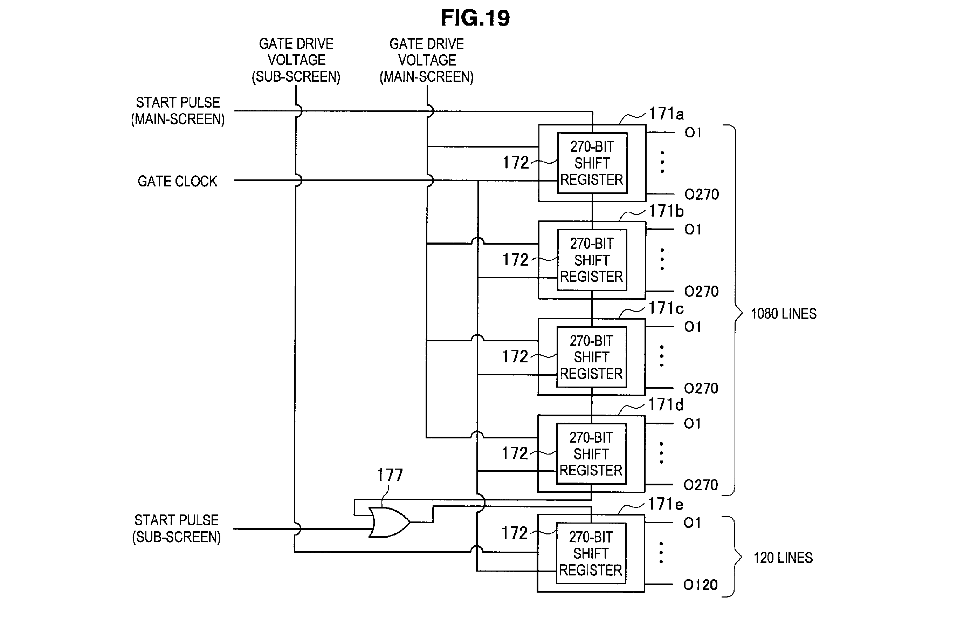

Fig. 19 is a diagram showing an example of the gate drive circuit 171 shown in Fig. 18. In the LCD panel 151', there are arranged first to fourth gate drive circuits 171a to 171d for the main screen, and a fifth gate drive circuit 171e for the sub-screen.

Each of the gate drive circuits 171a to 171e has a 270-bit shift register 172, in order to sequentially apply a drive voltage to up to 270 gate electrodes O. With the use of the shift registers 172, the pixels included in 1080 lines forming the main screen display area A21 are driven by the first to fourth gate drive circuits 171a to 171d, and the pixels included in 120 lines forming the sub-screen display area A22 are driven by the fifth gate drive circuit 171e.

The first to fourth gate drive sections 171a to 171d are each triggered by the input of a start pulse and each shift the shift register 172 in synchronization with a gate clock, thereby sequentially applying the drive voltage to the gate electrodes O1 to O270. The first to fourth gate drive circuits 171a a to 171d are cascade-connected, and when the start pulse for the main screen is input in the case where the drive power for the main screen is ON, the drive voltage is sequentially applied to the gate electrodes included in 1080 lines forming the main screen display area A21.

Further, the fifth gate drive circuit 171e is triggered by the input of the start pulse and shifts the shift register 172 in synchronization with a gate clock, thereby sequentially applying the drive voltage to the gate electrodes O1 to O120. In the fifth gate drive circuit 171e, the start pulse for the sub-screen is subjected to an OR operation 177 with a shift-up signal of the fourth gate drive circuit 171d, and the operation result is used as the start pulse for the sub-screen.

That is, in the case where the drive power for the main screen and the drive power for the sub-screen are ON, the drive voltage is sequentially applied to the gate electrodes included in 1080 lines of the main screen display area A21 and then to the gate electrodes included in 120 lines of the sub-screen display area A22. On the other hand, in the case where the drive power for the main screen is OFF and the drive power for the sub-screen is ON, when the start pulse for the sub-screen is input, the drive voltage is sequentially applied to the gate electrodes included in 120 lines of the sub-screen display area A22.

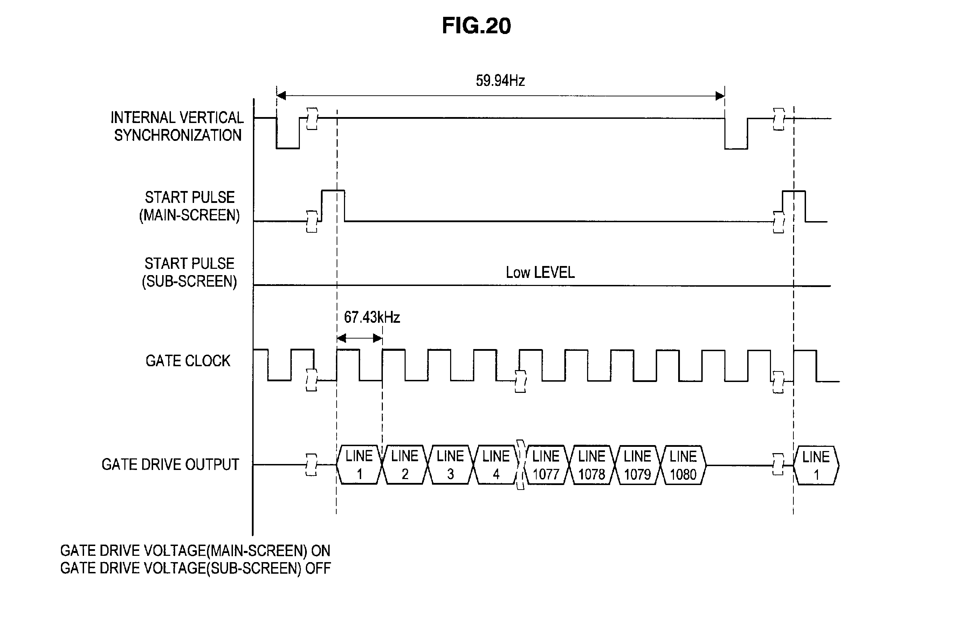

Fig. 20, Fig. 21, and Fig. 22 are timing diagrams showing scanning of gate drive of the main screen display mode, the sub-screen display mode, and the full screen display mode, respectively. In Figs. 20 to 22, there are shown: a vertical synchronization signal, a start pulse, and a gate clock, which are generated in the display control section 133; and a gate drive voltage and a gate drive output, which are generated in the drive voltage generation circuit 175.

In the respective screen display modes, the following pixels can be used for the video formats shown in Fig. 9, for example.

- Main screen display mode: 1920x1080 pixels (high-vision resolution)
- Sub-screen display mode: 1920x 120 pixels (special resolution)
- Full screen display mode: 1920x1200 pixels (WUXGA resolution)

Note that video data is input via HDMI with the internal vertical synchronization of 59.94 Hz, and the display control section 133 generates a vertical synchronization signal of 59.94 Hz in the same manner as the video data. The display control section 133 supplies the gate drive circuit 171 with a gate timing signal, and also supplies the source drive circuit 173 with the video data in synchronization with a dot clock at the timing at which the drive voltage is applied to each gate electrode.

In the main screen display mode, the gate drive power for the main screen is turned ON, and the gate drive power for the sub-screen is turned OFF. Then, as shown in Fig. 20, the gate drive circuit 171 is supplied with the gate clock of the horizontal synchronization of 67.43 kHz. Note that, in the main screen display mode, although the number of display effective lines is 1080, the total number of scan lines is 1125.

Into the first gate drive circuit 171a, the start pulse for the main screen is input in synchronization with the vertical synchronization signal. When the start pulse is input, the cascade-connected first to fourth gate drive circuits 171a to 171d each sequentially apply the drive voltage to the gate electrodes, while shifting the shift register 172 in synchronization with the gate clock.

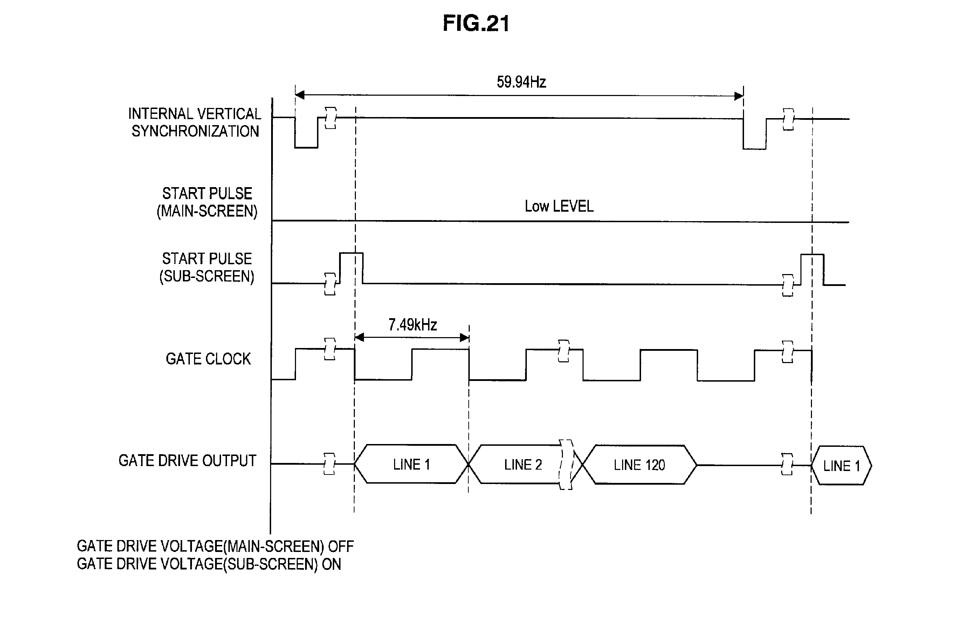

In the sub-screen display mode, the gate drive power for the sub-screen is turned ON. Then, as shown in Fig. 21, the gate drive circuit 171 is supplied with the gate clock of the horizontal synchronization of 7.49 kHz. Note that, in the sub-screen display mode, although the number of display effective lines is 120, the total number of scan lines is 124.

Into the fifth gate drive circuit 171e, the start pulse for the sub-screen is input in synchronization with the vertical synchronization signal. When the start pulse is input, the fifth gate drive circuit 171e sequentially applies the drive voltage to the gate electrodes, while shifting the shift register 172 in synchronization with the gate clock.

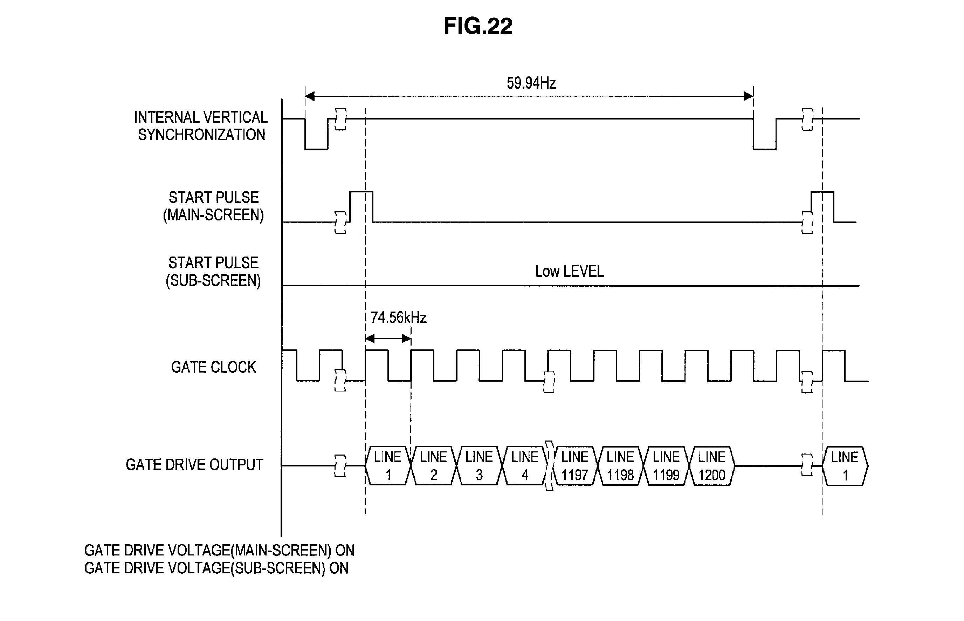

In the full screen display mode, the gate drive power for the main screen and the gate drive power for the sub-screen are turned ON. Then, as shown in Fig. 22, the gate drive circuit 171 is supplied with the gate clock of the horizontal synchronization of 74.56 kHz. Note that, in the full screen display mode, although the number of display effective lines is 1200, the total number of scan lines is 1245.

Into the first gate drive circuit 171a, the start pulse for the main screen is input in synchronization with the vertical synchronization signal. When the start pulse is input, the cascade-connected first to fourth gate drive circuits 171a to 171d each sequentially apply the drive voltage to the gate electrodes, while shifting the shift register 172 in synchronization with the gate clock. Then, when the shift-up signal of the fourth gate drive circuit 171d is subjected to the OR operation 177 and input to the fifth gate drive circuit 171e, the fifth gate drive circuit 171e sequentially applies the drive voltage to the gate electrodes, while shifting the shift register 172 in synchronization with the gate clock.

In this way, in the sub-screen display mode, the power consumption of the TV 100' can be further reduced by suppressing output of the backlight for the main screen and also suppressing the drive voltages used by the source drive circuit 171a to 171d for the main screen. Note that, although the description has been made of the case of controlling the supply of the drive voltage used by the gate drive circuit 171, the supply of a common voltage may be controlled.

[4-3. Summary]

As described above, according to the present embodiment, when performing passive information acquisition, the image information of the interactive service is displayed on the sub-screen display area A22, and the execution of the display function related to the main screen display area A21 that is other than the sub-screen display area A22 is suppressed, thereby suppressing display of unnecessary video information. Further, the output of backlight is suppressed in the main screen display area A21 and it is controlled such that the driving of the pixels is not executed, and hence, the power consumption of the TV 100' is reduced.

The preferred embodiments of the present invention have been described above with reference to the accompanying drawings, whilst the present invention is not limited to the above examples, of course. A person skilled in the art may find various alternations and modifications within the scope of the appended claims, and it should be understood that they will naturally come under the technical scope of the present invention.

For example, the description of the embodiment has been made of the case of transmitting the video signal using high-speed digital transmission HDMI. However, in the case where there is no need for the high-speed transmission of the video signal, the video signal may be transmitted using an AVI Info (Auxillary Video Information) frame in a partial display area mode or a sub-display area mode. In this case, the high-speed digital transmission is not used, and therefore the power consumed by the HDMI transmission can be reduced.

Further, the description of the embodiment has been made of the case where the video display system is configured from the TV 100, 100' and the STB 200 which are connected with each other using HDMI. However, the video display system may be configured from a TV with a built-in STB function of IPTV.

Further, the description of the embodiment has been made of the case where the TV 100, 100' is an LCD TV. However, the power consumption of the TV 100, 100' can be reduced even in the case where the TV 100, 100' has a plasma display or an organic EL display, by suppressing the execution of the display function in a part of the display area.

Note that, although the description of the first embodiment has been made of the case where there is set one partial display area A11, there may be set two or more partial display areas A11. Further, the two or more partial display areas A11 may be each set with the number of pixels that is different from each other. In this case, with the extension of the CEC command, the number of pixels of the partial display area A11 and/or the position thereof on the display area A10 may be set.

In the second embodiment, the description has been made of the case where the video information is displayed in each display mode, using the video data having the same resolution as the video format that is input via HDMI. However, with the scaling processing, the video information may be displayed in each display mode using video data of a resolution different from the video format that is input using HDMI.

Further, in the main screen display area A21 and the sub-screen display area A22, a message reception state or the like and video information of content may be displayed, respectively. Further, for example, a GUI menu of another application which is to be executed in the TV 100' or the STB 200 may be displayed. Further, one piece of video information may be displayed using the main screen display area A21 and the sub-screen display area A22.

Reference Signs List

100, 100'    TV

101, 101'    CPU
127          HDMI transmission section
135          Display
200          STB
A10          Display area
A11          Partial display area
A21          Main screen display area
A22          Sub-screen display area

**Claims**

1. A display device comprising:

   a communication section which receives image information and control information from an external device;
   a display section which displays the image information received from the external device on at least a part of a display area; and
   a control section which, based on the control information received from the external device, controls display of the image information related to a partial display area that forms a part of the display area and also suppresses execution of a display function related to an area other than the partial display area.

2. The display device according to claim 1, wherein, when an instruction of a partial display mode is received from the external device, the control section suppresses output of a backlight corresponding to the area other than the partial display area on the display area.

3. The display device according to claim 1, wherein, when an instruction of a partial display mode is received from the external device, the control section controls generation of image data such that a drive voltage of a pixel corresponding to the area other than the partial display area is suppressed.

4. The display device according to claim 1, wherein different areas on the display area are periodically set, each as the partial display area.

5. The display device according to claim 1, wherein the communication section transmits display area information indicating a logical resolution and a physical size of the partial display area to the external device, and receives image information adjusted based on the display area information from the external device, and
   wherein the display section displays the adjusted image information on the partial display area.

6. The display device according to claim 5,

wherein the communication section receives, from external device, image information in which at least one of a size of an image, a text size of an image, a layout of an image, or an image for forming the image information is adjusted based on the display area information.

7. The display device according to claim 1,
wherein the display area is divided into a main screen display area and a sub-screen display area which is formed of the partial display area fixed on the display area, and
wherein, when an instruction of a sub-screen display mode is received from the external device, the control section suppresses output of a backlight corresponding to the main screen display area.

8. The display device according to claim 7,
wherein when the instruction of the sub-screen display mode is received from the external device, the control section performs control such that driving of a pixel corresponding to the main screen display area is not executed.

9. The display device according to claim 7,
wherein a pixel of the main screen display area and a pixel of the sub-screen display area are each arranged on a display panel formed of a single glass substrate.

10. The display device according to claim 7,
wherein a backlight corresponding to the main screen display area and a backlight corresponding to the sub-screen display area are formed of different light sources from each other.

11. The display device according to claim 10,
wherein the backlight corresponding to the main screen display area is a lamp, and the backlight corresponding to the sub-screen display area is an LED.

12. The display device according to claim 7,
wherein, in between the backlight corresponding to the main screen display area and the backlight corresponding to the sub-screen display area, there is provided a light-shielding plate.

13. The display device according to claim 1,
wherein the external device is a network connection device.

14. A display system comprising:

a display device; and
an external device,
wherein the external device transmits image information and control information to the display device, and

wherein the display device includes
a communication section which receives the image information and the control information from the external device,
a display section which displays the image information received from the external device on at least a part of a display area, and
a control section which, based on the control information received from the external device, controls display of the image information related to a partial display area that forms a part of the display area and also suppresses execution of a display function related to an area other than the partial display area.

15. A display method comprising:

a step of receiving image information and control information from an external device; and
a step of controlling display of the image information related to a partial display area that forms a part of a display area based on the control information, and also suppressing execution of a display function related to an area other than the partial display area.

16. A program for causing a computer to execute a display method including
a step of receiving image information and control information from an external device, and
a step of controlling display of the image information related to a partial display area that forms a part of a display area based on the control information, and also suppressing execution of a display function related to an area other than the partial display area.

**Amended claims under Art. 19.1 PCT**

1. Amended) A display device comprising:

a communication section which receives image information and control information from an external device;
a display section which displays the image information received from the external device on at least a part of a display area; and
a control section which, based on the control information according to a type of a network service to be used, the control information being received from the external device, controls display of the image information related to a partial display area that forms a part of the display area and also suppresses execution of a display function related to an area other than the partial display area.

2. The display device according to claim 1,

wherein, when an instruction of a partial display mode is received from the external device, the control section suppresses output of a backlight corresponding to the area other than the partial display area on the display area.

**3.** The display device according to claim 1, wherein, when an instruction of a partial display mode is received from the external device, the control section controls generation of image data such that a drive voltage of a pixel corresponding to the area other than the partial display area is suppressed.

**4.** The display device according to claim 1, wherein different areas on the display area are periodically set, each as the partial display area.

**5.** The display device according to claim 1, wherein the communication section transmits display area information indicating a logical resolution and a physical size of the partial display area to the external device, and receives image information adjusted based on the display area information from the external device, and
wherein the display section displays the adjusted image information on the partial display area.

**6.** The display device according to claim 5, wherein the communication section receives, from external device, image information in which at least one of a size of an image, a text size of an image, a layout of an image, or an image for forming the image information is adjusted based on the display area information.

**7.** The display device according to claim 1, wherein the display area is divided into a main screen display area and a sub-screen display area which is formed of the partial display area fixed on the display area, and
wherein, when an instruction of a sub-screen display mode is received from the external device, the control section suppresses output of a backlight corresponding to the main screen display area.

**8.** The display device according to claim 7, wherein when the instruction of the sub-screen display mode is received from the external device, the control section performs control such that driving of a pixel corresponding to the main screen display area is not executed.

**9.** The display device according to claim 7, wherein a pixel of the main screen display area and a pixel of the sub-screen display area are each arranged on a display panel formed of a single glass substrate.

**10.** The display device according to claim 7, wherein a backlight corresponding to the main screen display area and a backlight corresponding to the sub-screen display area are formed of different light sources from each other.

**11.** The display device according to claim 10, wherein the backlight corresponding to the main screen display area is a lamp, and the backlight corresponding to the sub-screen display area is an LED.

**12.** The display device according to claim 7, wherein, in between the backlight corresponding to the main screen display area and the backlight corresponding to the sub-screen display area, there is provided a light-shielding plate.

**13.** The display device according to claim 1, wherein the external device is a network connection device.

**14.** Amended) A display system comprising:

a display device; and
an external device,
wherein the external device transmits image information and control information to the display device, and
wherein the display device includes
a communication section which receives the image information and the control information from the external device,
a display section which displays the image information received from the external device on at least a part of a display area, and
a control section which, based on the control information according to a type of a network service to be used, the control information being received from the external device, controls display of the image information related to a partial display area that forms a part of the display area and also suppresses execution of a display function related to an area other than the partial display area.

**15.** Amended) A display method comprising:

a step of receiving image information and control information from an external device; and
a step of, based on the control information according to a type of a network service to be used, the control information being received from the external device, controlling display of the image information related to a partial display area that forms a part of a display area, and also suppressing execution of a display function related to an area other than the partial display area.

**16.** Amended) A program for causing a computer to execute a display method including
a step of receiving image information and control information from an external device, and
a step of, based on the control information according to a type of a network service to be used, the control information being received from the external device, controlling display of the image information related to a partial display area that forms a part of a display area, and also suppressing execution of a display function related to an area other than the partial display area.

FIG.1

MESSAGE FROM
TAKASHI

KANA TAKASHI FUMIYA

A10

L1

L2

A11

100

200

NW

IPTV
SERVICE

300

# FIG.2

MOBILE PHONE NETWORK ~11

IMS NETWORK ~1

AS (CHAT) ~7    HSS ~5

AS(IPTV) ~9    CSCF ~3

IPTV SYSTEM ~300

EPG SERVER ~301

VIDEO SERVER ~303

BROADBAND IP NETWORK ~15

RG (IMS GATEWAY) ~13

STB ~200    HDMI    TV ~100

~10

PROVIDER NETWORK

HOME NETWORK

EP 2 461 583 A1

**FIG.3**

**FIG.4**

EP 2 461 583 A1

# FIG.5

EP 2 461 583 A1

# FIG.6

EP 2 461 583 A1

100

A10

L1

L2

MESSAGE FROM
TAKASHI

KANA TAKASHI FUMIYA

A11

300

200

IPTV
SERVICE

STB

HDMI

# FIG.7

CPU ~101

BACKLIGHT CONTROL SECTION ~141

POWER SOURCE SUPPLY SECTION ~143

POWER SOURCE FOR EACH LAMP

147   151   A10   156

INVERTER CIRCUIT   COLD-CATHODE TUBE LAMP

INVERTER CIRCUIT   COLD-CATHODE TUBE LAMP

INVERTER CIRCUIT   COLD-CATHODE TUBE LAMP

⋮   ⋮

INVERTER CIRCUIT   COLD-CATHODE TUBE LAMP

INVERTER CIRCUIT   COLD-CATHODE TUBE LAMP

A11

VIDEO PROCESSING SECTION ~129

LIGHT CONTROL SIGNAL

**FIG.8**

## FIG.9

| IDENTIFICATION CODE | HORIZONTAL RESOLUTION (PIXEL(S)) | VERTICAL RESOLUTION (PIXEL(S)) | I / P | VERTICAL SYNCHRONIZATION FREQUENCY | ASPECT RATIO |
|---|---|---|---|---|---|
| 1 | 640 | 480 | P | 59.94/60Hz | 16.9 |
| 2 | 720 | 480 | P | 59.94/60Hz | 16.9 |
| 3 | 720 | 480 | P | 59.94/60Hz | 16.9 |
| 4 | 1280 | 720 | P | 59.94/60Hz | 16.9 |
| 5 | 1920 | 1080 | I | 59.94/60Hz | 16.9 |
| 16 | 1920 | 1080 | P | 59.94/60Hz | 16.9 |
| 17 | 720 | 576 | P | 50Hz | 4.3 |
| 18 | 720 | 576 | P | 50Hz | 16.9 |
| 19 | 1280 | 720 | P | 50Hz | 16.9 |
| 20 | 1920 | 1080 | I | 50Hz | 16.9 |
| 21 | 1920 | 1080 | P | 50Hz | 16.9 |
| 31 | 1920 | 1080 | P | 23.97/24Hz | 16.9 |
| 32 | 1920 | 1080 | P | 25Hz | 16.9 |
| 34 | 1920 | 1080 | P | 29.97/30Hz | 16.9 |
| 0 | IDENTIFICATION CODE UNKNOWN (ONLY AVI Info IS AVAILABLE) | | | | |

EP 2 461 583 A1

# FIG.10A

| START BIT | HEADER BLOCK | DATA BLOCK | · · · | DATA BLOCK |
|---|---|---|---|---|

71   73   75   75

# FIG.10B

| b7 | b6 | b5 | b4 | b3 | b2 | b1 | b0 | EOM | ACK |
|---|---|---|---|---|---|---|---|---|---|

81   83   85

# FIG.10C

| b7 | b6 | b5 | b4 | b3 | b2 | b1 | b0 | EOM | ACK |
|---|---|---|---|---|---|---|---|---|---|

91   93   95

## FIG.11

| OPCODE NAME | OPCODE VALUE | PARAMETER | RESPONSE COMMAND |
|---|---|---|---|
| <Active Source> | 0×62 | [Physical Address] | NONE |
| <Image View On> | 0×04 | NONE | NONE |
| <Text View On> | 0×0D | NONE | NONE |
| <Standby> | 0×36 | NONE | NONE |
| <Vendor Command> | 0×89 | [Vendor Specific Data] | VENDOR DEFINITION |
| <Vendor Command with ID> | 0×A0 | [Vendor ID] [Vendor Specific Data] | VENDOR DEFINITION |
| <Give Device Power Status> | 0×8F | NONE | <Report Power Status> |
| <Report Power Status> | 0×90 | [Power Status] | NONE |

EP 2 461 583 A1

**FIG.12**

| OPCODE NAME | OPCODE VALUE | PARAMETER | RESPONSE COMMAND |
|---|---|---|---|
| <Give Display Area Size> | 0×A0 | [Vendor ID][0×91] | <Report Display Area Size> |
| <Report Display Area Size> | 0×A0 | [Vendor ID][0×92]<br>[Display Area Mode]<br>[Physical Vertical Size]<br>[Physical Horizontal Size] | NONE |
| <Set Display Area Mode> | 0×A0 | [Vendor ID][0×93]<br>[Display Area Mode] | NONE |
| <Give Display Area Mode> | 0×A0 | [Vendor ID][0×94]<br>[Display Area Mode] | <Report Display Area Mode> |
| <Report Display Area Mode> | 0×A0 | [Vendor ID][0×95]<br>[Display Area Mode] | NONE |

EP 2 461 583 A1

# FIG.13

# FIG.14

A10

46

1016mm

MESSAGE FROM
TAKASHI

😩 ☹ 😄
KANA TAKASHI FUMIYA

226mm

A11

A10

46

MESSAGE FROM
TAKASHI

😩 ☹ 😄
KANA TAKASHI FUMIYA

🕐

☁

452mm

RECOMMENDED TV PROGRAM
SMILE, MORNING DOOR

A11'

**FIG.15A**

**FIG.15B**

**FIG.15C**

EP 2 461 583 A1

**FIG.16A**

**FIG.16B**

FIG.17

**FIG.18**

EP 2 461 583 A1

## FIG.19

GATE DRIVE
VOLTAGE
(SUB-SCREEN)

GATE DRIVE
VOLTAGE
(MAIN-SCREEN)

START PULSE
(MAIN-SCREEN)

~171a

270-BIT
SHIFT
REGISTER

172

O1

O270

GATE CLOCK

~171b

270-BIT
SHIFT
REGISTER

172

O1

O270

~171c

270-BIT
SHIFT
REGISTER

172

O1

O270

1080 LINES

~171d

270-BIT
SHIFT
REGISTER

172

O1

O270

177

~171e

START PULSE
(SUB-SCREEN)

270-BIT
SHIFT
REGISTER

172

O1

O120

120 LINES

EP 2 461 583 A1

# FIG.20

EP 2 461 583 A1

# FIG.21

INTERNAL VERTICAL SYNCHRONIZATION

START PULSE (MAIN-SCREEN)

Low LEVEL

START PULSE (SUB-SCREEN)

59.94Hz

GATE CLOCK

7.49kHz

GATE DRIVE OUTPUT

LINE 1  LINE 2  LINE 120  LINE 1

GATE DRIVE VOLTAGE(MAIN-SCREEN) OFF
GATE DRIVE VOLTAGE(SUB-SCREEN) ON

EP 2 461 583 A1

# FIG.22

EP 2 461 583 A1

<table>
<tr><td colspan="2" align="center">**INTERNATIONAL SEARCH REPORT**</td><td>International application No.<br>PCT/JP2010/060542</td></tr>
</table>

A. CLASSIFICATION OF SUBJECT MATTER
*H04N7/173*(2006.01)i, *G09G3/20*(2006.01)i, *G09G3/34*(2006.01)i, *G09G3/36*(2006.01)i, *G09G5/14*(2006.01)i

According to International Patent Classification (IPC) or to both national classification and IPC

B. FIELDS SEARCHED

Minimum documentation searched (classification system followed by classification symbols)
H04N7/173, G09G3/20, G09G3/34, G09G3/36, G09G5/14

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 6-95621 A (Fujitsu Ltd.),<br>08 April 1994 (08.04.1994),<br>paragraphs [0011] to [0012], [0039]; fig. 2<br>(Family: none) | 1-16 |
| A | JP 8-286647 A (Canon Inc.),<br>01 November 1996 (01.11.1996),<br>claim 6; fig. 3<br>(Family: none) | 1-16 |
| A | JP 2000-112435 A (Seiko Epson Corp.),<br>21 April 2000 (21.04.2000),<br>claim 1; fig. 1<br>(Family: none) | 1-16 |

☒ Further documents are listed in the continuation of Box C.      ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>07 July, 2010 (07.07.10) | Date of mailing of the international search report<br>20 July, 2010 (20.07.10) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

| International application No. |
| --- |
| PCT/JP2010/060542 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2009-135638 A  (Sharp Corp.),<br>18 June 2009 (18.06.2009),<br>claim 2<br>(Family: none) | 1-16 |
| A | JP 2007-310319 A  (Sharp Corp.),<br>29 November 2007 (29.11.2007),<br>paragraph [0028]<br>(Family: none) | 1-16 |

Form PCT/ISA/210 (continuation of second sheet) (July 2009)

**REFERENCES CITED IN THE DESCRIPTION**

**Patent documents cited in the description**

- JP H3198026 A
- JP H5196915 A